# EUROPEAN PATENT APPLICATION

(11) **EP 2 978 199 A1**
(43) Date of publication of application: **27.01.2016**
(21) Application number: 14769254.5
(22) Date of filing: 22.01.2014
(51) Int. Cl.: H04M 1/67, G06F 3/041, G06F 3/048

(54) **TERMINAL DEVICE AND OPERATION LOCK RELEASE METHOD**

(30) Priority: 18.03.2013 JP 2013055127
(71) Applicant: NTT Docomo, Inc., Tokyo 100-6150 (JP)
(72) Inventor: KWAK, Sumin, Tokyo 100-6150 (JP); AOYAMA, Tsukasa, Tokyo 100-6150 (JP); HEO, Yoonok, Tokyo 100-6150 (JP); TAKAMA, Katsuyuki, Tokyo 100-6150 (JP)
(74) Representative: Beder, Jens
(86) International application number: PCT/JP2014/051257
(87) International publication number: WO 2014/148095

(57) **Abstract**

A mobile terminal device 1 includes a touch panel display (21) that displays an image and receives an input operation of information by a user's finger, an operation lock control unit (24) that controls stop of the display of an image and the receipt of an input operation on the touch panel display (21), and a coordinates and distance detection unit (23) that detects proximity coordinates of the finger to the touch panel display (21) and a level of a proximity distance in the proximity coordinates, and the operation lock control unit (24) performs control to release the stop when a combination of the proximity coordinates and the level of the proximity distance is approximate to prestored pattern information.

## Description

### Technical Field

The present invention relates to a terminal device and an operation lock release method.

### Background Art

Highly functional terminal devices such as smartphones and tablet terminals are rapidly becoming widespread and, in such circumstances, a vast amount of information is treated in terminal devices compared with before. Accordingly, there are increasing needs for information protection in terminal devices.

As a technique to meet such needs, a mobile terminal disclosed in Patent Literature 1 below is known. In this mobile terminal, an object is displayed on a touch panel display, and operation lock is released by touching the touch panel display and sliding a finger or the like across the object. Further, a mobile terminal in which operation lock can be released by entering specified information such as a password is widely used.

### Citation List

### Patent Literature

PTL 1: Japanese Unexamined Patent Application Publication No. 2012-70297

### Summary of Invention

### Technical Problem

However, the mobile terminals described above do not sufficiently provide information protection. For example, information security is not sufficiently assured when an easily guessed password is used, when an input operation is peeped at by a third party, when a touch path on a display is guessed by a fingerprint or the like left on the screen and the like. Further, because it is necessary to keep specified information such as a complicated password in mind in order to enhance information security, there is a problem that operation lock that is intuitive for a true user cannot be attained.

The present invention has been accomplished to solve the above problems and an object of the present invention is thus to provide a terminal device and an operation lock release method that enable an intuitive lock release operation to enhance user-friendliness for a true user and further provide sufficient information security.

### Solution to Problem

To solve the above problem, a terminal device according to one aspect of the present invention includes a touch panel display configured to display an image and receive an input operation of information by an operating tool, a lock control means configured to control stop of the display of an image and the receipt of an input operation on the touch panel display, and a detection means configured to detect proximity coordinates of an operating tool to the touch panel display and a level of a proximity distance in the proximity coordinates, and the lock control means performs control to release the stop when a combination of the proximity coordinates and the level of the proximity distance is approximate to prestored pattern information.

An operation lock release method according to another aspect of the present invention includes an information input/output step of displaying an image and receiving an input operation of information by an operating tool on a touch panel display, a lock control step of controlling stop of the display of an image and the receipt of an input operation on the touch panel display by a lock control means, and a detection step of detecting proximity coordinates of an operating tool to the touch panel display and a level of a proximity distance in the proximity coordinates by a detection means, and in the lock control step, control is made to release the stop when a combination of the proximity coordinates and the level of the proximity distance is approximate to prestored pattern information.

According to the terminal device or the operation lock release method described above, the stop of image display and receipt of input on the touch panel display is controlled by the lock control means, combinations of the proximity coordinates of an operating tool and the level of the proximity distance on the touch panel display are detected, and when the combinations are approximate to the preset pattern, the stop is released by the lock control means. It is thereby possible for a true user to release the operation lock of the touch panel display by an intuitive operation without using complicated information, and further it is difficult for others to release the operation lock by guessing information, thereby ensuring sufficient information security. It is therefore possible to enhance user-friendliness and improve information security.

The lock control means may perform control to display the prestored reference image on the touch panel display and then release the stop by referring to the pattern information corresponding to the reference image based on a detection result by the detection means. It is thereby possible for a true user to release the operation lock by a more intuitive operation and further improve user-friendliness.

The terminal device may further include a pattern information storage means configured to store a plurality of combinations of reference coordinates and a distance type as the pattern information, and the lock control means may determine whether a plurality of combinations of the proximity coordinates and the level of the proximity distance are approximate to the plurality of combinations contained in the pattern information. In this configuration, whether or not to release the operation lock is determined based on the combinations of the proximity coordinates and the proximity distance and the combinations indicated by the pattern information, and it is thereby possible to stably execute the operation lock release.

### Advantageous Effects of Invention

According to the present invention, it is possible to enable an intuitive lock release operation to enhance user-friendliness for a true user and further provide sufficient information security.

### Brief Description of Drawings

Fig. 1 is a schematic diagram of a mobile terminal device according to one preferred embodiment of the present invention.
Fig. 2 is a diagram showing an example of a data structure of pattern information stored in a pattern information storage unit 31 in Fig. 1.
Fig. 3 is a diagram showing an example of a data structure of pattern information stored in a pattern information storage unit 31 in Fig. 1.
Fig. 4(a) is a diagram showing an output example of a reference image on a touch panel display 21 in Fig. 1, and Fig. 4(b) is a diagram showing an operation path by a user on a reference image on the touch panel display 21 in Fig. 1.
Fig. 5 is a diagram showing in detail an operation path by a user on a reference image on the touch panel display 21 in Fig. 1.
Fig. 6 is a flowchart showing an operation when registering pattern information by the mobile terminal device 1 in Fig. 1.
Fig. 7 is a flowchart showing an operation when releasing an operation lock state by the mobile terminal device 1 in Fig. 1.
Fig. 8 is a diagram showing an image of a screen displayed by the mobile terminal device 1 at the time of release of an operation lock state.
Fig. 9 is a diagram showing another example of a reference image displayed by the mobile terminal device 1 when releasing an operation lock state.

### Description of Embodiments

A preferred embodiment of a terminal device and an operation lock release method according to the present invention will be described hereinafter in detail with respect to the drawings. It is noted that, in the description of the drawings, the same elements will be denoted by the same reference symbols and redundant description will be omitted.

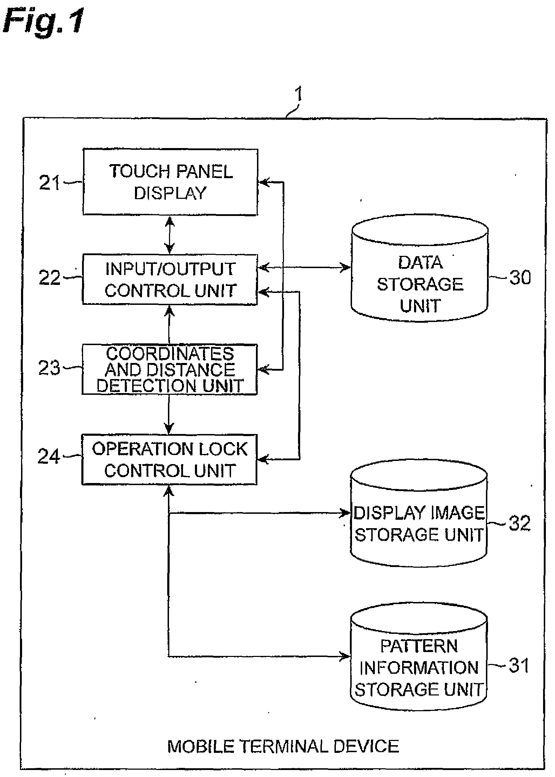

Fig. 1 is a schematic diagram of a mobile terminal device 1 according to one preferred embodiment of the present invention. The mobile terminal device 1 shown in Fig. 1 is a mobile information processing terminal device that can connect to a mobile communication network or a wireless LAN (Local Area Network), such as a smartphone, a tablet terminal and a mobile phone terminal.

The mobile terminal device 1 is a terminal device having a touch panel display 21 as an output device for displaying information, and it includes an input/output control unit 22, a coordinates and distance detection unit (detection means) 23, an operation lock control unit (lock control means) 24, a data storage unit 30, a display image storage unit 32, and a pattern information storage unit (pattern information storage means) 31 as functional elements. The functions of each of the elements of the mobile terminal device 1 are described hereinafter in detail.

The touch panel display 21 of the mobile terminal device 1 is an input/output device that displays images such as a menu screen, icon images, photographs and documents and receives an information input operation by detecting proximity or contact of an operating tool. Although the touch panel display 21 detects proximity or contact of a user's finger as an operating tool in this embodiment, it may be configured to be able to detect proximity or contact of a stylus pen as an operating tool. Further, the touch panel display 21 is configured to be able to detect a proximity distance between a user's finger and the screen of the touch panel display 21. For example, the touch panel display 21 is a capacitive touch panel display and configured to be able to calculate a distance (proximity distance) between the screen and a finger by detecting the amount of change in capacitance between the finger and a circuit in the touch panel display. Alternatively, an optical structure capable of calculating a proximity distance using infrared rays such as In-Cell may be employed as the touch panel display 21.

The input/output control unit 22 reads image data from the data storage unit 30 that stores image data to be displayed and gives it to the touch panel display 21 and thereby controls image display on the touch panel display 21. Further, the input/output control unit 22 receives input of information by proximity or contact of a user's finger through the coordinates and distance detection unit 23. For example, the input/output control unit 22 performs control to display an icon image on the touch panel display and detects contact with the icon image and thereby receives input of a specified command corresponding to the icon image.

The coordinates and distance detection unit 23 receives a signal from the touch panel display 21 and calculates two-dimensional coordinates (which are referred to hereinafter as "proximity/contact coordinates") on the screen where proximity or contact of a finger is detected and a distance (which is referred to hereinafter as "proximity distance") between the screen and the finger detected by the touch panel display 21 at this time. Then, the coordinates and distance detection unit 23 gives the calculated proximity/contact coordinates and proximity distance to the operation lock control unit 24. At this time, the coordinates and distance detection unit 23 specifies a code that indicates the distance in stages as the proximity distance and gives the code to the operation lock control unit 24. For example, the coordinates and distance detection unit 23 calculates and gives the two-dimensional coordinate values "(X,Y)" as the proximity/contact coordinates and the distance level value "LD" as the proximity distance.

When the operation lock control unit 24 receives a specified operation from a user through the input/output control unit 22 (for example, when a specific input button is pressed or when selection of an icon image on the touch panel display 21 is received), the operation lock control unit 24 sets an operation lock state by controlling the input/output control unit 22 to stop display of an image and receipt of an input operation on the touch panel display 21. Further, when a release condition is satisfied after the operation lock state is set, the operation lock control unit 24 releases the operation lock state by starting display of an image and receipt of an input operation on the touch panel display 21. Specifically, as the release condition, the operation lock control unit 24 analyzes a plurality of combinations of the proximity/contact coordinates and the proximity distance given by the coordinates and distance detection unit 23 in a time series and determines whether those combinations in a time series are approximate to pattern information prestored in the pattern information storage unit 31, and when determining that they are approximate, determines that the release condition is satisfied. When analyzing those combinations, the operation lock control unit 24 controls the input/output control unit 22 so as to display a reference image stored in the display image storage unit 32 on the touch panel display 21.

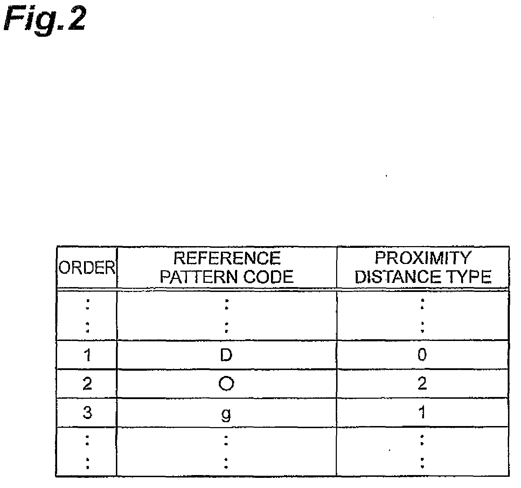

To be more specific, the operation lock control unit 24 analyzes the coordinate values given by the coordinates and distance detection unit 23 in a time series and recognizes an approximate code from the path of the coordinate values and the corresponding distance level value. At this time, the operation lock control unit 24 recognizes the code so that the type of the code varies according to the distance level. For example, when the path of the coordinates is recognized as being approximate to any of an upper-case alphabet "O", a lower-case alphabet "o" and a symbol "o" and the distance level "LD" corresponding to the path of the coordinates is "0" indicating the proximity distance "0mm", the operation lock control unit 24 recognizes the code as the upper-case alphabet "O". On the other hand, when the distance level "LD" corresponding to the path of the coordinates is "1" indicating the proximity distance "1mm", the operation lock control unit 24 recognizes the code as the lower-case alphabet "o", and when the distance level "LD" corresponding to the path of the coordinates is "2" indicating the proximity distance "2mm", the operation lock control unit 24 recognizes the code as the symbol "o". In this manner, the operation lock control unit 24 analyzes combinations of the path of the coordinate values and the corresponding distance level value in a time series and thereby generates a plurality of combinations of the codes and the distance level. Further, the operation lock control unit 24 determines whether the generated plurality of combinations of the codes and the distance level match a plurality of combinations contained in the pattern information stored in the pattern information storage unit 31 and thereby determines whether the release condition is satisfied or not. Fig. 2 shows an example of a data structure of the pattern information stored in the pattern information storage unit 31. As shown therein, combinations of the reference pattern codes "D", "o" and "g" and the proximity distance type "0", "2" and "1" corresponding to each of the codes are contained in the pattern information in a specified sequence, and it is determined whether those combinations and the sequence match the generated plurality of combinations of the codes and the distance level.

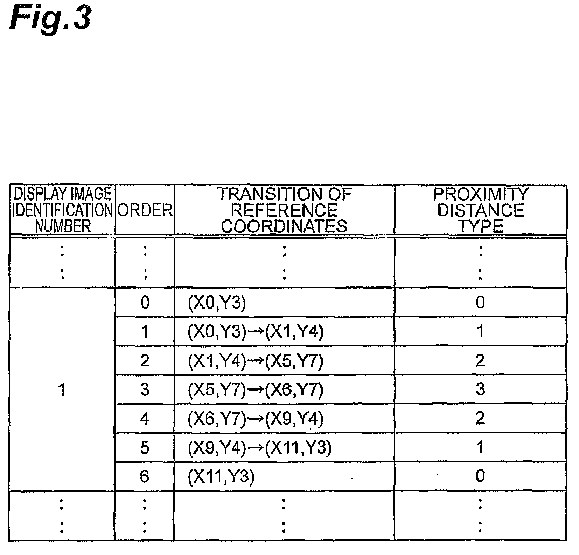

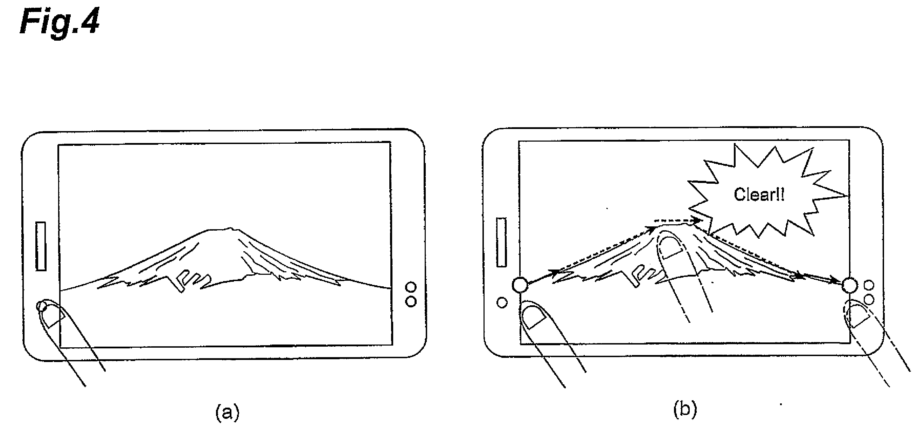

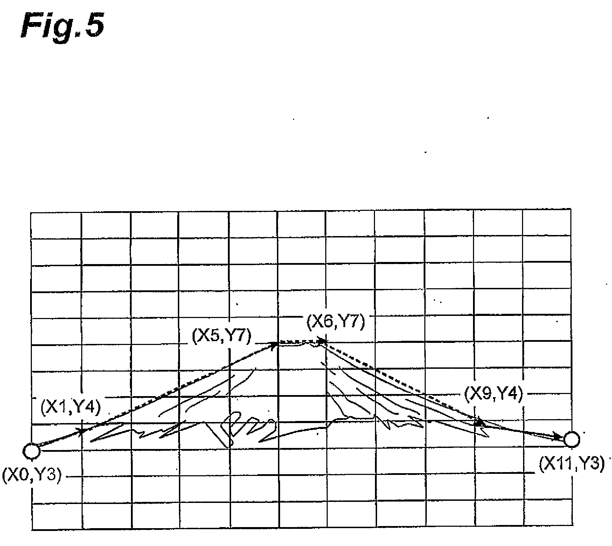

Further, the operation lock control unit 24 may control the input/output control unit 22 so as to display a reference image stored in the display image storage unit 32 on the touch panel display 21 and then determine whether the release condition is satisfied or not. Fig. 4(a) shows an output example of a reference image on the touch panel display 21, and Fig. 4(b) and Fig. 5 show an operation path by a user on the reference image. In Fig. 4(b) and Fig. 5, the path of contact by a finger is indicated by a circle and a solid line, and the path of proximity by a finger is indicated by a dotted line. The operation lock control unit 24 acquires a plurality of combinations of the coordinate values "(X, Y)" and the distance level value "LD" in a time series from the coordinates and distance detection unit 23 in response to receiving a user operation on the reference image. Then, the operation lock control unit 24 determines whether those plurality of combinations are approximate to the pattern information corresponding to the reference image as shown in Fig. 3. As shown therein, in the pattern information, a plurality of combinations of the transition of the reference coordinates "(X0, Y3)"→"(X1, Y4)" and the proximity distance type "1" are sequentially stored in association with a display image identification number "1" that identifies the reference image. The operation lock control unit 24 sequentially determines whether the time-series combinations of the coordinate values "(X, Y)" and the distance level value "LD" are close to the positions of the path recognized from the transition of the reference coordinates contained in the pattern information and the distance level value "LD" matches the proximity distance type corresponding to the transition of the reference coordinates. For example, referring to Fig. 5, when the time-series combinations of the coordinate values "(X, Y)" and the distance level value "LD" are along the path "(X0, Y3)"→"(X1, Y4)" on the reference image and the distance level value has a match, it is determined that they are approximate to the combination of the transition of the reference coordinates "(X0, Y3)"→"(X1, Y4)" and the proximity distance type "1" contained in the pattern information. Likewise, the operation lock control unit 24 determines whether the time-series combinations of the coordinate values "(X, Y)" and the distance level value "LD" are approximate to the all transitions of the reference coordinates corresponding to the reference image contained in the pattern information and, when they are approximate to the all transitions of the reference coordinates, determines that the release condition is satisfied. At this time, the operation lock control unit 24 determines the approximation with the pattern information by rounding the coordinate values "(X, Y)" to the grid coordinates as shown in Fig. 5.

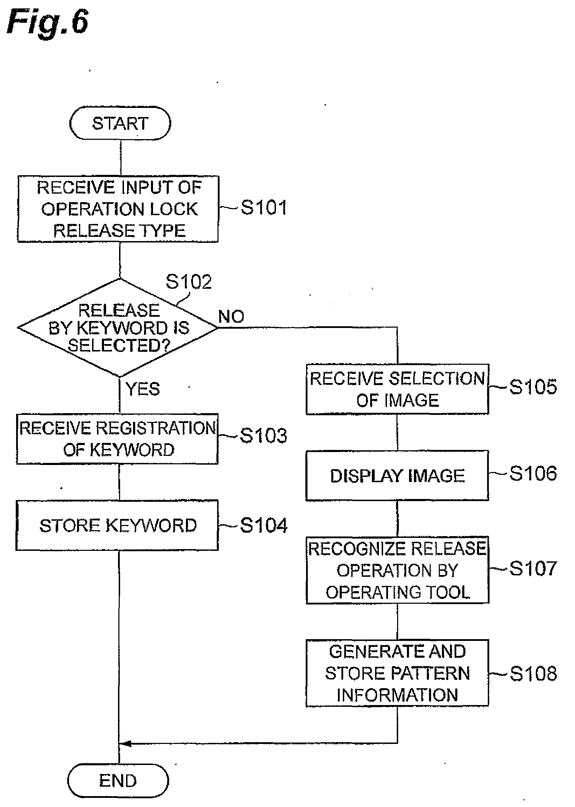

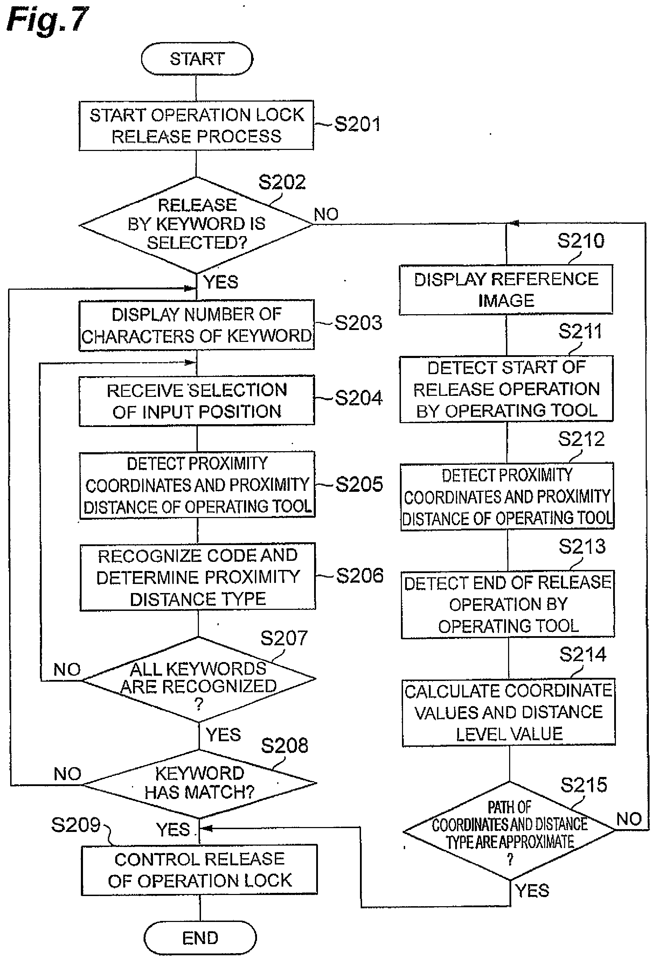

The operation of the mobile terminal device 1 is described and further an operation lock release method in the mobile terminal device 1 is described in detail hereinafter with reference to Figs. 6 and 7. Fig. 6 is a flowchart showing an operation at the time of registering pattern information by the mobile terminal device. Fig. 7 is a flowchart showing an operation at the time of releasing an operation lock state by the mobile terminal device.

The operation of the mobile terminal device 1 when registering the pattern information to be stored in the pattern information storage unit 31 is described firstly with reference to Fig. 6. First, selection between a release method using a keyword and a release method using a reference image is received as the type of the operation lock release operation from a user of the mobile terminal device 1 through the input/output control unit 22 (Step S101). When it is determined that the release method using a keyword is selected (YES in Step S102), input of a keyword is received from the user by the input/output control unit 22 (Step S103). Next, a proximity distance type corresponding to the type of each code is specified from each code of the received keyword by the input/output control unit 22, and pattern information containing a combination between each code and a proximity distance type as shown in Fig. 2 is generated and stored into the pattern information storage unit 31 (Step S104).

On the other hand, when it is determined that the release method using a reference image is selected (NO in Step S102), selection of a reference image to be used for operation lock release is received from the user by the input/output control unit 22 (Step S105). When the selection is received, the selected reference image is displayed on the touch panel display 21 by the input/output control unit 22 (Step S106). In response thereto, an operation for operation lock release on the displayed reference image is received from the user and recognized by the input/output control unit 22 (Step S107). As a result, pattern information containing combinations of the transition of the reference coordinates and the proximity distance type as shown in Fig. 3 is generated from the recognized operation and stored in association with an identification number that identifies the reference image into the pattern information storage unit 31 (Step S108).

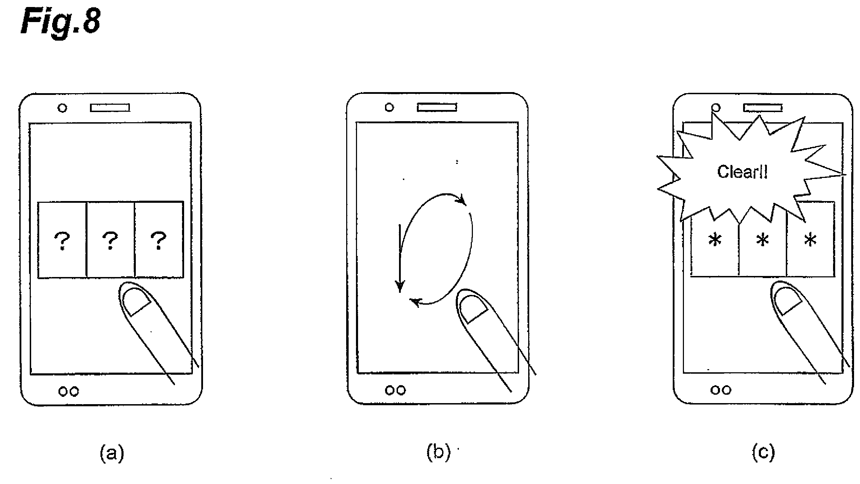

An operation lock release procedure in the mobile terminal device 1 using the pattern information generated in the above procedure is described hereinafter with reference to Fig. 7. Fig. 8 shows a display example of the touch panel display 21 when releasing operation lock.

An operation lock release process is started when a specified operation is received from the user by the input/output control unit 22 (Step S201). Then, it is determined which release method has been selected in the pattern information registration process described above (Step S202). When it is determined that the release method using a keyword has been selected (YES in Step S202), the number of codes contained in the registered pattern information is displayed in a specified format on the touch panel display 21 by the input/output control unit 22 (Step S203, Fig. 8(a)). After that, selection or a position of a keyword to be entered is received from the user by the input/output control unit 22 (Step S204). Further, the path of proximity/contact coordinates and the proximity distance by the user at the selected input position of the keyword are detected by the coordinates and distance detection unit 23 (Step S205). Then, the input code is recognized by the operation lock control unit 24 from a combination of the detected path of coordinate values and the distance level value (Step S206, Fig. 8(b)).

It is determined whether the above-described recognition of the input code at the input position of the keyword is done at all input positions (Step S207), and when it is determined that the recognition is not done (NO in Step S207), the process returns to Step S204 by the input/output control unit 22. On the other hand, when it is determined that the recognition of the input code is done (YES in Step S207), it is determined by the operation lock control unit 24 whether a combination of the input code and the distance level value at each input position matches the pattern information stored in the pattern information storage unit 31 (Step S208). When it is determined that it matches the pattern information (YES in Step S208), release of operation lock is controlled by the operation lock control unit 24 (Step S208, Fig. 8(c)). On the other hand, when it is determined that it does not match the pattern information (NO in Step S208), the process returns to Step S203 by the input/output control unit 22 to input a keyword again.

As a result of the determination in Step S202, when it is determined that the release method using a reference image has been selected (NO in Step S202), the reference image stored in the display image storage unit 32 is displayed on the touch panel display 21 by the input/output control unit 22 (Step S210). In response thereto, detection of a release operation by a user's finger is started by the input/output control unit 22 (Step S211). Specifically, the proximity/contact coordinates and the proximity distance by the user's finger are detected in a time series by the coordinates and distance detection unit 23 (Step S212). The detection operation is repeated until a specified operation for ending the release operation (for example, a tap (contact) operation at specified coordinates on the touch panel display 21) by the user is detected (Step S213).

After that, time-series combinations of the coordinate values and the coordinate level values corresponding to the user's operation are calculated by the coordinates and distance detection unit 23 (Step S214). Then, it is determined by the operation lock control unit 24 whether the calculated time-series combinations are approximate to the combinations of the transition of reference coordinates and the proximity distance type contained in the pattern information corresponding to the reference image (Step S215). When it is determined that they are approximate to the pattern information (YES in Step S215), release of operation lock is controlled by the operation lock control unit. 24 (Step S209). On the other hand, when it is determined that they are not approximate to the pattern information (NO in Step S215), the process returns to Step S210 by the input/output control unit 22 to display the reference image again.

According to the mobile terminal device 1 described above, the stop of image display and receipt of input on the touch panel display 21 is controlled by the operation lock control unit 24, combinations of the proximity/contact coordinates of a user's finger and the level of the proximity distance on the touch panel display 21 are detected, and when the combinations are approximate to the preset pattern information, the stop of image display and receipt of input is released by the operation lock control unit 24. It is thereby possible for a true user to release the operation lock of the touch panel display 21 by an intuitive operation without using complicated information, and further it is difficult for others to release the operation lock by guessing information, thereby ensuring sufficient information security. It is therefore possible to enhance user-friendliness and improve information security.

Further, the operation lock control unit 24 performs control to display the prestored reference image on the touch panel display 21 and then release the stop by referring to the pattern information corresponding to the reference image based on a detection result by the coordinates and distance detection unit 23. It is thereby possible for a true user to release the operation lock by a more intuitive operation and further improve user-friendliness.

Further, a plurality of combinations of reference coordinates and a distance type are stored as the pattern information in the pattern information storage unit 31, and whether or not to release the operation lock is determined by the operation lock control unit 24 based on the combinations of proximity/contact coordinates and a proximity distance and the combinations indicated by the pattern information. It is thereby possible to stably execute the operation lock release.

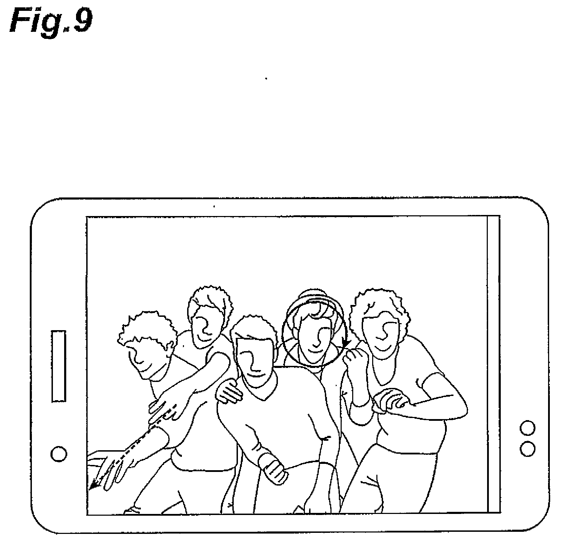

It is noted that the present invention is not limited to the above-described embodiment. For example, the mobile terminal device 1 can use various images as the reference image to be displayed for determination on operation lock release. For example, the reference image such as a person image shown in Fig. 9 may be prestored, and the pattern information combining the path of contact coordinates indicated by the solid line and the path of proximity coordinates indicated by the dotted line in Fig. 9 may be prestored in the pattern information storage unit 31.

### Industrial Applicability

The present invention is applied to a terminal device and an operation lock release method and enables an intuitive lock release operation to enhance user-friendliness for a true user and provides sufficient information security.

### Reference Signs List

1...mobile terminal device, 21...touch panel display, 22...input/output control unit, 23...coordinates and distance detection unit (detection means), 24...operation lock control unit (lock control means), 30...data storage unit, 31...pattern information storage unit (pattern information storage means), 32...display image storage unit

## Claims

1. A terminal device comprising:
a touch panel display configured to display an image and receive an input operation of information by an operating tool;
a lock control means configured to control stop of the display of an image and the receipt of an input operation on the touch panel display; and
a detection means configured to detect proximity coordinates of an operating tool to the touch panel display and a level of a proximity distance in the proximity coordinates, wherein
the lock control means performs control to release the stop when a combination of the proximity coordinates and the level of the proximity distance is approximate to prestored pattern information.

2. The terminal device according to Claim 1, wherein
the lock control means performs control to display a prestored reference image on the touch panel display and then release the stop by referring to the pattern information corresponding to the reference image based on a detection result by the detection means.

3. The terminal device according to Claim 1 or 2, further comprising:
a pattern information storage means configured to store a plurality of combinations of reference coordinates and a distance type as the pattern information, wherein
the lock control means determines whether a plurality of combinations of the proximity coordinates and the level of the proximity distance are approximate to the plurality of combinations contained in the pattern information.

4. An operation lock release method comprising:
an information input/output step of displaying an image and receiving an input operation of information by an operating tool on a touch panel display;
a lock control step of controlling stop of the display of an image and the receipt of an input operation on the touch panel display by a lock control means; and
a detection step of detecting proximity coordinates of an operating tool to the touch panel display and a level of a proximity distance in the proximity coordinates by a detection means, wherein
in the lock control step, control is made to release the stop when a combination of the proximity coordinates and the level of the proximity distance is approximate to prestored pattern information.
